# EUROPEAN PATENT SPECIFICATION

(11) **EP 1 865 287 B1**
(45) Date of publication and mention of the grant of the patent: **26.12.2012**
(21) Application number: 06729680.6
(22) Date of filing: 22.03.2006
(51) Int. Cl.: G01C 21/36, G08G 1/0969, G09B 29/00, G09B 29/10

(54) **GUIDE DEVICE, GUIDE METHOD, GUIDE PROGRAM, AND RECORDING MEDIUM**
FÜHRUNGSEINRICHTUNG, FÜHRUNGSVERFAHREN, FÜHRUNGSPROGRAMM UND AUFZEICHNUNGSMEDIUM
DISPOSITIF, PROCEDE ET PROGRAMME DE GUIDAGE ET SUPPORT D'ENREGISTREMENT

(30) Priority: 30.03.2005 JP 2005100165
(43) Date of publication of application: 12.12.2007
(73) Proprietor: Pioneer Corporation, Kanagawa 212-0031 (JP)
(72) Inventor: MATSUMOTO, Reiji, Corp. Research and Dev. Lab., Tsurugashima-shi, Saitama 35 (JP); WATANABE, Tomo, Corp. Research and Dev. Lab., Tsurugashima-shi, Saitama 35 (JP); ADACHI, Hajime, Corp. Research and Dev. Lab., Tsurugashima-shi, Saitama 35 (JP)
(74) Representative: Haley, Stephen
(86) International application number: PCT/JP2006/305713
(87) International publication number: WO 2006/109467

(56) References cited:
- JP-A- 08 110 236
- JP-A- 11 213 282
- JP-A- 2000 009 484
- JP-A- 2002 372 431
- JP-A- 2003 232 645
- JP-A- 2004 309 223
- JP-A- 2004 333 467
- US-A1- 2004 199 325
- US-B1- 6 256 579
- US-B1- 6 263 276
- US-B1- 6 594 580

## Description

### TECHNICAL FIELD

The present invention relates to a guide device, a guide method, a guide program, and a recording medium. However, the application of the present invention is not limited to the guide device, the guide method, the guide program, and the recording medium.

### BACKGROUND ART

Guide devices that provide transit guidance to traverse a guide route to the destination have widely been used. Among such guide devices, there is a device that performs guidance that prevents deviation and differs from regular guidance. The guidance to prevent deviation is performed at a point that is determined to likely cause deviation, for example, based on angles at which plural roads are connected or an attribute of a road.

Document US 6594 580 B1 discloses a navigation device that detects deviations from a planned route. The number of times a deviation has occured is stored in memory. When the number of deviations is sufficient by high, the device increases the level of detail in route guidance.

Patent Document 1: Japanese Patent Laid-Open Publication No. H08-201096

### PROBLEM TO BE SOLVED BY THE INVENTION

However, in the conventional technology, a point at which deviation is likely to occur is determined based on information concerning roads such as a connecting angle of roads and an attribute. Therefore, such a problem is cited that a point at which the guidance to prevent deviation is provided and a point at which deviation is likely to occur on an actual road do not necessarily coincide. Specifically, for example, a problem is cited in that guidance is not provided for a point at which deviation is likely to occur because of buildings that are actually built or other circumstances in the environment, not only because of the conditions that are determined only based on road information concerning a connecting angle of roads, an attribute, etc.

### MEANS FOR SOLVING PROBLEM

A guide device according to an invention of claim 1 includes a partial-route extracting unit that extracts, from a guide route to a destination point, a partial route constituting a part of the guide route; a detecting unit that detects a deviation route that is associated with the partial route extracted by the partial-route extracting unit and that deviates from the partial route; an acquiring unit that acquires information concerning a deviation frequency that is associated with the deviation route detected by the detecting unit; a deviation-route extracting unit that extracts, when a plurality of deviation routes are detected by the detecting unit, a deviation route whose deviation tendency is the highest based on the information concerning a deviation frequency; a reporting unit that reports, based on the information concerning a deviation frequency acquired by the acquiring unit, a detection result detected by the detecting unit, wherein the reporting unit, when a deviation route is extracted by the deviation-route extracting unit, reports the extracted deviation route.

A guide method according to an invention of claim 5 includes a partial-route extracting step of extracting, from a guide route to a destination point, a partial route constituting a part of the guide route; a detecting step of detecting a deviation route that is associated with the partial route extracted at the partial-route extracting step and that deviates from the partial route; an acquiring step of acquiring information concerning a deviation frequency that is associated with the deviation route detected at the detecting step; a deviation-route extracting step of extracting, when a plurality of deviation routes are detected at the detecting step, a deviation route whose deviation tendency is the highest based on the information concerning a deviation frequency; a reporting step of reporting, based on the information concerning a deviation frequency acquired at the acquiring step unit, a detection result detected at the detecting step, wherein the reporting step includes, when a deviation route is extracted at the deviation-route extracting step, reporting the extracted deviation route.

A guide program according to an invention of claim 6 causes a computer to execute the guide method according to claim 5.

A computer-readable recording medium may store therein the guide program according to claim 6.

### BRIEF DESCRIPTION OF DRAWINGS

Fig. 1 is a block diagram showing a functional configuration of a guide device;
Fig. 2 is a flowchart showing procedures in a process performed by the guide device;
Fig. 3 is a block diagram showing one example of a hardware configuration of a navigation device according to the present example;
Fig. 4 is an explanatory diagram showing a format of data in a deviation route database;
Fig. 5 is an explanatory diagram showing a road configuration;
Fig. 6 is an explanatory diagram showing another road configuration;
Fig. 7 is a flowchart showing procedures of a route retrieval process in the navigation device;
Fig. 8 is a flowchart showing procedures of a route guidance process in the navigation device; and
Fig. 9 is a flowchart showing procedures of a deviation determining process in the navigation device.

### EXPLANATIONS OF LETTERS OR NUMERALS

100 Guide device
101 Partial-route extracting unit
102 Detecting unit
103 Reporting unit
104 Acquiring unit
105 Deviation-route extracting unit

### BEST MODE(S) FOR CARRYING OUT THE INVENTION

Exemplary embodiments of a guide device, a guide method, a guide program, and a recording medium according to the present invention are explained in detail below with reference to the accompanying drawings. The guide device according to the present invention can be applied to, for example, a navigation device and the like. The guide device according to a present embodiment is equipped in a mobile object, for example, a vehicle (including four-wheel vehicles and two-wheel vehicles) and the like.

### (Functional configuration of guide device)

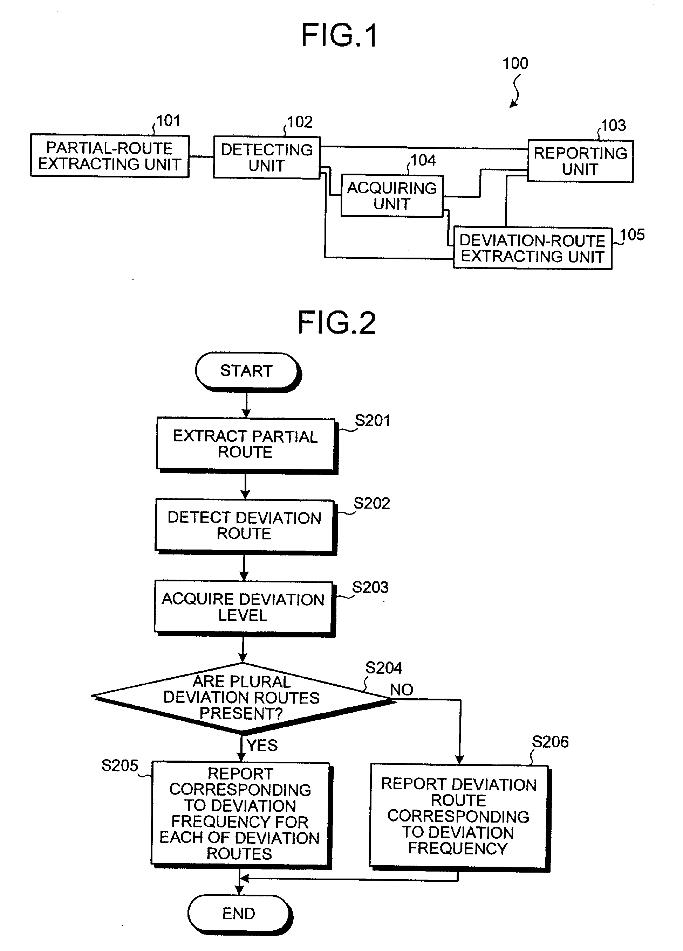

Fig. 1 is a block diagram showing a functional configuration of the guide device. A guide device 100 includes a partial-route extracting unit 101, a detecting unit 102, a reporting unit 103, an acquiring unit 104, and a deviation-route extracting unit 105.

The partial-route extracting unit 101 extracts, from a guide route to a destination, a partial route that constitutes a part of the guide route. The detecting unit 102 detects a deviation route that deviates from the partial route and is associated with the partial route extracted by the partial-route extracting unit 101.

The reporting unit 103 reports a detection result that is detected by the detecting unit 103. The reporting unit 103 can be configured to perform the reporting corresponding to a deviation frequency acquired by the acquiring unit 104. The reporting unit 103 can be configured to perform the reporting corresponding to a deviation frequency based on information concerning a deviation frequency acquired by the acquiring unit 104, for each deviation route, when more than one deviation route is detected by the detecting unit 102.

The acquiring unit 104 acquires the information concerning a deviation frequency that is associated with the deviation route detected by the detecting unit 102. The deviation-route extracting unit 105 extracts, based on the information concerning a deviation frequency when more than one deviation route is detected by the detecting unit 102, a deviation route for which a tendency of deviation is the highest.

### (Procedures in process by guide device)

Fig. 2 is a flowchart showing procedures in a process performed by the guide device. The process shown in Fig. 2 is performed on condition that a guide route has been set. In the process shown in Fig. 2, first, a partial route that constitutes a part of the set guide route is extracted (step 5201). In the present embodiment, the process at step S201 achieves a partial-route extracting step. Next, a deviation route that is associated with the extracted partial route is detected (step S202). In the present embodiment, the process at step S202 achieves a detecting step.

Information concerning the deviation route that is associated with the detected deviation route is then acquired (step S203). In Fig. 2 as the process at step S203, the acquiring is described as "acquire deviation level. Information concerning a deviation frequency (deviation level) indicates, for example, the number of times deviation has occurred, a ratio (deviation rate) of occurrence of deviation with respect to the number of times the partial route is set as a guide route, and the like.

It is determined whether more than one deviation route is detected (step S204), and when it is determined that more than one deviation route is detected (step S204 : YES), reporting corresponding to the deviation frequency is performed for each deviation route based on the information concerning a deviation route that is associated with the detected deviation route (step S205). In the present embodiment, the process at step S205 achieves a part of a reporting step.

At step S205, configuration may be such that, for example, only a deviation route having a high deviation frequency among a plurality of deviation routes is reported. Alternatively, at step S205, configuration may be such that only a deviation route having the highest deviation tendency that is extracted by the deviation-route extracting unit 105 is reported. In addition, at step S205, for example, report content can be determined corresponding to the deviation frequency.

On the other hand, when it is determined that plural deviation routes are not detected (step S204: NO), the reporting corresponding to the deviation frequency is performed based on the information concerning a deviation frequency that is associated with the detected deviation route (step S206). In the present embodiment, the process at step S206 achieves a part of the reporting step.

At step S206, for example, when a deviation frequency, associated with the detected deviation route, is higher than a deviation frequency that is set in advance by a user, the deviation route is reported. Alternatively, at step S206, for example, for a route having a higher deviation frequency than a deviation frequency that is set in advance by a user or the like, the report content is provided in detail, and when it is lower than that, the report content is provided simply.

As described above, according to the present embodiment, a deviation route that deviates from the partial route and is associated with a partial route extracted from a guide route to a destination is reported. By thus reporting a deviation route where deviation is likely to occur, when the guide route is configured as specific partial routes not just based on information concerning a road such as a connecting angle of roads and an attribute thereof, prevention of deviation from the guide route based on actual use is possible.

Moreover, according to the present embodiment, the reporting corresponding to a deviation frequency is performed based on information concerning a deviation frequency associated with a deviation route. This enables, for example, to report a deviation route having a high tendency of deviation with consideration of actual tendencies when traversing the road. Thus, prevention of deviation from a route guide based on actual use can be achieved while avoiding excessive reporting.

Furthermore, according to the present embodiment, when more than one deviation route is detected, reporting corresponding to a deviation frequency can be performed for each of the deviation routes based on the information concerning a deviation frequency. Thus, for example, by reporting only a deviation route having a high deviation frequency, excessive reporting can be avoided. Moreover, for example, by determining the report content according to the deviation frequency, and by giving priority to reporting a deviation route having a high deviation frequency over a deviation route having a low deviation frequency, as much information to prevent deviation as possible can be provided to a driver within an allowable range.

### Example

Exemplary examples of the guide device, the guide method, the guide program, and the recording medium according to the present invention are explained in detail below with reference to the accompanying drawings. In the present example, an example of application to a navigation device is described. A navigation device according to the present example is equipped in a mobile object. The mobile object includes, for example, a vehicle (including a four-wheel vehicle and a two-wheel vehicle) and the like. The implementation of the present invention is not limited to a navigation device.

### (Hardware configuration of navigation device)

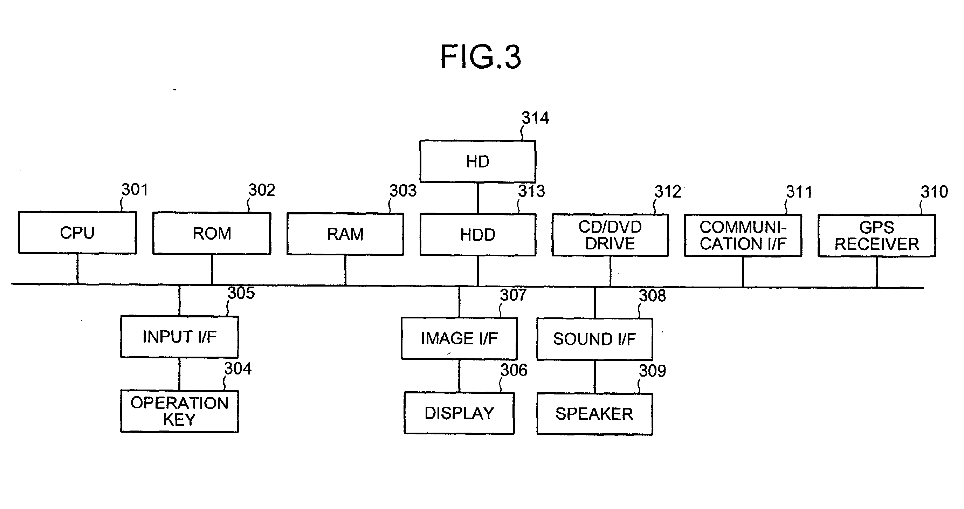

Fig. 3 is a block diagram showing one example of a hardware configuration of the navigation device according to the present example. The navigation device has a configuration including a CPU 301, a ROM 302, a RAM 303, an operation key 304, an input I/F 305, a display 306, an image I/F 307, a sound I/F 308, a speaker 309, a GPS receiver 310, a communication I/F 311, a CD/DVD drive 312, an HDD 313, and an HD 314. The CPU 301, the ROM 302, and the RAM 303 constitute a microcomputer.

The CPU (central processing unit) 301 executes various control programs stored in the ROM 302 and the like, and controls the entire navigation device. The CPU 301 calculates an optimal guide route from a current point to a destination point, for example, based on information concerning the current point, information concerning the destination point, map information, and the like. The current point is acquired by the GPS receiver 310. The destination point is input by a user by operating the operation key 304. The map information is stored in the HD 314, and is read by the HDD 313.

In the present example, computation of an optimal guide route from a current point to a destination point by the CPU 301 is explained as route retrieval. The guide route to be retrieved by the CPU 301 includes a guide route that is re-retrieved during the route guidance, in addition to a guide route that has been retrieved before the start of the route guidance. During the route guidance, the CPU 301 gives guidance for travel at a guidance point set on the guide route. The guidance point is a point at which the vehicle equipped with the navigation device is to change traveling directions, such as a point at which a right or left turn is made at an intersection and the like, a point at which deviation from a main road to a side road is made, and an interchange at which transition from a local road to an express road (or from an express road to a local road) is made.

Moreover, the CPU 301 performs route guidance based on the retrieved guide route. During the route guidance, the CPU 301 communicates information concerning the route guidance with the GPS receiver 310, the HDD 313, the CD/DVD drive 312, and the like, computes a position on a map at which the vehicle is traveling based on the information concerning a current point and the map information, and outputs the computation result to the display 306.

During the route guidance, the CPU 301 communicates information concerning the route guidance with the communication I/F 311, takes traffic information received through the communication I/F 311 into consideration, and generates real-time route guidance information. For example, when a traffic jam occurs on the guide route being guided, the CPU 301 retrieves a new route to avoid this traffic jam. The route guidance information generated by the CPU 301 is output to the display 306 through the image I/F 307. Other than the case where a traffic jam and the like occurs on the guide route being guided, the re-retrieval is performed, in the case where a transit point or the destination point is changed by a user intentionally, and the like.

The information concerning the guide route retrieved (including re-retrieval) or the destination point that is set at the route retrieval are stored in a memory area, such as the HD 314, the ROM 302, and the RAM 303, provided in the navigation device. Such information stored in the memory area can be used, for example, for retrieval of a guide route to be performed later or the like.

Furthermore, the CPU 301 generates information of tone and sound corresponding to patterns. Specifically, the CPU 301 performs setting of a virtual sound source that corresponds to the guide point and generation of sound guidance information to output to the speaker 309 through the sound I/F 308.

In addition, the CPU 301 extracts a partial route that constitutes the computed guide route, and acquires a deviation route that is associated with the extracted partial route. Moreover, the CPU 301 acquires the information concerning a deviation frequency that is associated with the deviation route.

The ROM 302 (read only memory) 302 stores various kinds of control programs. The RAM 303 (random access memory) 303 functions as a work area of the CPU 301. The RAM 303 may be a volatile memory from which written information is erased when the power is turned OFF, such as by the stopping of the engine of the vehicle in which the navigation device is equipped. However, in the present example, a non-volatile memory from which written information is not erased even when the power is turned OFF is used.

A memory area that rewritably stores traffic information that is acquired from a source external to the navigation device is secured in the ROM 302 or the RAM 303. In addition, a memory area that stores information associated with a deviation route is provided in the ROM 302 or the RAM 303. The predetermined memory area stores the information in a non-volatile manner regardless of the ON/OFF status of the engine of the vehicle in which the navigation device is equipped.

In the ROM 302 or the RAM 303, for example, a memory area that stores, in a non-volatile manner, the information concerning the route that is retrieved (including re-retrieved) by the CPU 301 or the information concerning a destination point that is set at the route retrieval can be secured. These memory areas are not limited to being secured in the ROM 302 or the RAM 303, and can be secured in, for example, the HD 314.

The operation key 304 outputs, to the input I/F 305, information input by a user, such as characters, numerals, and various instructions. The input I/F 305 outputs the information input from the operation key 304 to the CPU 301. As a configuration of the operation key 304, various forms heretofore known, such as a push button switch that detects physical pressing/non-pressing, a touch panel, a keyboard, and a joy stick, can be employed. The operation key 304 may be configured in a form in which an input operation is performed by sound using a microphone that inputs sound from an external source.

The operation key 308 can be provided integrally with the navigation device, or can take a form in which operation is possible apart from the navigation device as a remote control. The operation key 304 can be configured with any one of the various forms described above, or can be configured with a plurality of the forms.

A user inputs information by executing an input operation according to the form of the operation key 304. The information that is input through the operation of the operation key 304 includes, for example, the destination point. Specifically, in the present example, a point to which a person, traveling in the vehicle in which the navigation device is equipped, intends to reach is set as the destination point.

For example, when a touch panel is employed as a form of the operation key 304, this touch panel is layered on a display side of the display 306 to be used. In this case, input information is recognized by controlling a display timing of the display 306, and an operation timing and position coordinates with respect to the touch panel (operation key 304).

By employing a touch panel that is layered on the display 306 as the form of the operation key 304, a lot of information can be input without an increase in the size of the operation key 304. As the touch panel, various types of conventional touch panels, such as a resistive type and a pressure sensitive type can be used.

The display 306 is connected to the image I/F 307, and is controlled by the image I/F 307 to display, for example, the map information, current position information, and the like. On the display 306, an icon, a cursor, a menu, a window, or various kinds of information such as characters and images may be displayed. Furthermore, on the display 306, the map information stored in the HD 314, the information concerning a route that is retrieved by the CPU 301 and the route guidance to guide the vehicle to travel along the route, and the like are displayed. The display 306 includes, for example, a TFT liquid crystal display, an organic EL display, a plasma display, and the like.

Specifically, the image I/F 307 is configured with, for example, a graphic controller that controls the entire display 306, a buffer memory, such as a VRAM (video RAM), that temporarily stores image information that can be displayed immediately, a control IC that controls display of the display 306 based on the image information that is output from the graphic controller, and the like.

The sound I/F 308 controls output data to the speaker 309 connected thereto, thereby playing the guide sound. The sound I/F 308 can be configured, for example, with a D/A converter that performs D/A conversion on sound digital data, an amplifier that amplifies a sound analog signal that is output from the D/A converter, and an A/D converter that performs A/D conversion on sound analog data. The speaker 309 can be provided singularly or in plurality.

The GPS receiver 310 acquires information concerning a current point of the navigation device. The GPS receiver 310 is a device that receives a radio wave from GPS satellites and calculates a geometric position relative to the GPS satellites, and can perform the measurement anywhere on earth. The GPS is an abbreviated name for global positioning system, and is a system in which a position on the ground is accurately measured by receiving radio waves from at least four satellites. Since the GPS is a conventional technology, explanation of the GPS is omitted.

The GPS receiver 310 can be configured by, for example, an antenna to receive a radio wave from the satellites, a tuner that demodulates the received radio wave, an arithmetic circuit that calculates a current position based on information acquired by demodulation, and the like. As the radio wave from the GPS satellites, an L1 wave is used that is a carrier wave of 1.57542 GHz and on which a C/A (coarse and access) code and a navigation message are carried. With this wave, the current position (latitude and longitude) of the device itself is detected.

Upon detection of the current position of the device, information collected by various sensors not shown, such as a vehicle speed sensor, a gyro sensor, an angular speed sensor, an odometer sensor, and an inclination sensor that are equipped in the vehicle in which the device (navigation device) is equipped, can be taken into consideration. The vehicle speed sensor detects vehicle speed from the output-side of the transmission shaft of the vehicle in which the navigation device is equipped. The angular speed sensor detects an angular speed of the vehicle at turning, and outputs angular speed information and relative bearing information. The odometer sensor calculates the number of pulses per rotation of a wheel by counting the number of pulse signals that have a predetermined cycle and are output according to rotation of the wheel, and outputs travel distance information based on the number of pulses per rotation. The inclination sensor detects an inclination angle of a road surface and outputs inclination angle information.

The communication I/F 311 regularly (or irregularly) receives road traffic information including information concerning traffic jams and traffic controls. The reception of the road traffic information by the communication I/F 311 can be performed when road traffic information is distributed from a VICS (vehicle information and communication system) center, or can be performed by periodically requesting the VICS center for road traffic information.

The communication I/F 311 can be implemented as an FM tuner, a VICS/beacon receiver, or other communication devices. The received road traffic information is used for retrieval (including re-retrieval) of a route, and for example, is provided for retrieval of a route to avoid a congested part or a time-regulated road.

Although detailed explanation is omitted since it is a conventional technology, "VICS" is an information communication system that transmits, in real time, road traffic information, including information concerning traffic jams and traffic controls that is edited and processed in the VICS center, to be express in characters and graphics on the navigation device and the like. The method of transmitting the road traffic information (VICS information) that is edited and processed at the VICS center to the car navigation device includes a method using a "beacon" and an "FM multiplex broadcast" provided on each road.

The "beacon" includes a "radio wave beacon" that is mainly used on an expressway and an "optical beacon" that is used on major local roads. When "FM multiplex broadcasting" is used, road traffic information for a wide area can be received. When the "beacon" is used, road traffic information that is necessary at a place at which the vehicle is positioned, such as detailed information concerning the nearest road relative to the position of the vehicle can be received.

The CD/DVD drive 312 controls reading/writing of information with respect to a CD (CD-ROM, CD-R, CD-RW, etc.) and a DVD. Although illustration is omitted in Fig. 3, arbitrary information such as music and images can be recorded by a user.

Instead of a CD/DVD, or in addition thereto, a portable recording medium such as an MO (magneto-optical disk) and a memory card can be used. When a portable recording medium such as an MO and a memory card is used, a special drive device that controls reading/writing of information with respect to the portable recording medium such as an MO and a memory card is provided separately.

The HDD (hard disk drive) 313 controls reading/writing of information with respect to the HD (hard disk) 314. The HD 314 stores various control programs and various kinds of information in a computer-readable manner. In the present example, it is assumed that the guide program that implements the present invention is stored in the HD 314. The guide program that implements the present invention is not limited to the one stored in the HD 314. The guide program may be recorded on a portable medium such as a CD/DVD instead of the HD 314 and can be executed. The HD 314 accepts the writing of information by the HDD 313, and records the written information in a non-volatile manner.

In the HD 314, the map information is recorded. The map information is used at the retrieval of a route and the route guidance performed by the CPU 301. The map information includes background information that expresses features such as buildings, rivers, and ground surfaces, and road configuration information that expresses a configuration of roads, and is two-dimensionally or three-dimensionally drawn on a display screen of the display 306.

The background information includes background configuration information that expresses a configuration of a background and background type information that expresses the type of background. The background configuration information includes information expressing, for example, a representative point of a feature, a polyline, a polygon, coordinates of the feature, and the like. The background type information includes, for example, text information expressing name, address, and telephone number of a building and the like, and type information expressing a type of a feature, such as building, river, and the like.

The road configuration information is information concerning a road network that has a plurality of nodes and links. The node is information that indicates an intersection at which plural roads intersect, such as a junction of three streets, a crossroad, a junction of five streets, and the like. The link is information that indicates a road connecting between nodes. Some of the links include configuration complementary points that enable expression of a curved road. The road configuration information includes traffic condition information. The traffic condition information is information that indicates a characteristic of an intersection, length (distance) of each link, vehicle width, a traveling direction, passage prohibition, a road type, and the like.

As a characteristic of an intersection, for example, a complicated intersection such as a junction of three streets and a junction of five streets, an intersection that branches at a shallow angle, an intersection near the destination point, an entrance and an exit or a junction of an expressway, and any such intersections for which a route deviation rate is high, and the like are indicated. The route deviation rate can be calculated from, for example, a past travel history. As a road type, for example, an expressway, a toll road, a local road, and the like are indicated.

Although in the present example, the map information is recorded on the HD 314, it is not limited thereto. The map information is not limited to be recorded on a unit that is integrally provided in the hardware of the navigation device, and can be provided externally from the navigation device. In this case, the navigation device acquires the map information, for example, through the communication I/F 311 from an external source outside the navigation device. The acquired map information can be recorded on the HD 314, or on the RAM 303, the CD/DVD, or the like.

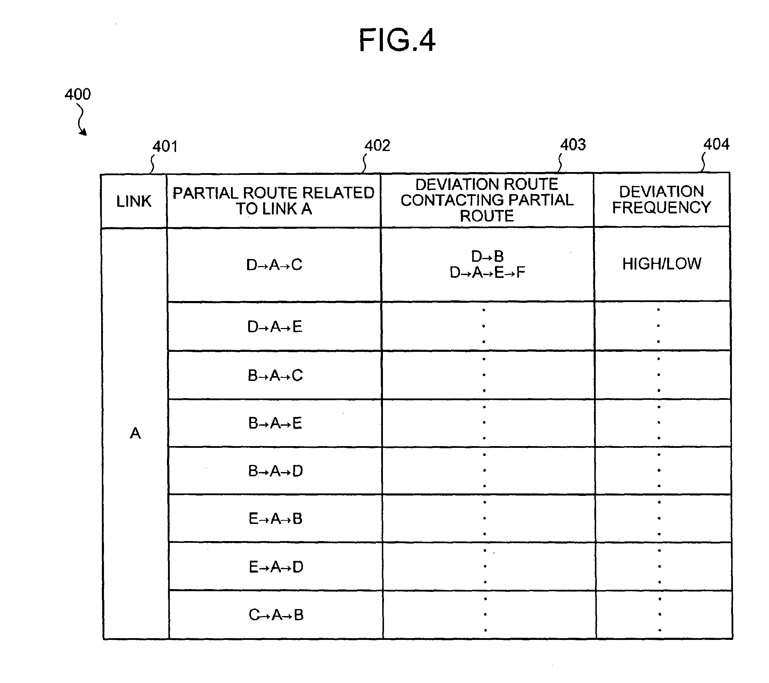

In the HD 314, a deviation route database (see Fig. 4) is stored in which a deviation route that is a deviation from a guide route used in route guidance and is associated with a partial route constituting the guide route. This deviation route database can include information concerning a situation in which the guide route is deviated from, and the like. The deviation route database can specifically include, for example, information concerning a date and weather at the time when the guide route is deviated from. In the deviation route database, a reporting level to be a criterion, at the reporting of the deviation route described hereinafter, for determination of a report content or selection of a deviation route to be reported can be stored.

The reporting level can be set, for example, by a user by operating the operation key 304, or can be set in advance at the time of manufacturing the navigation device. The deviation route database 400 can be stored in the memory area secured in the ROM 302 or the RAM 303. Moreover, the deviation route database 400 is not limited to the one stored in a storage unit (HD 314, ROM 302, or RAM 303) that is provided integrally with the navigation device. For example, the deviation route database can be provided in a server that is provided remotely from the navigation device and can communicate with the navigation device through the communication I/F 311. The content of the deviation route database can be stored in a fixed manner (not re-writable or deletable), or can be stored in such a manner that information can be added.

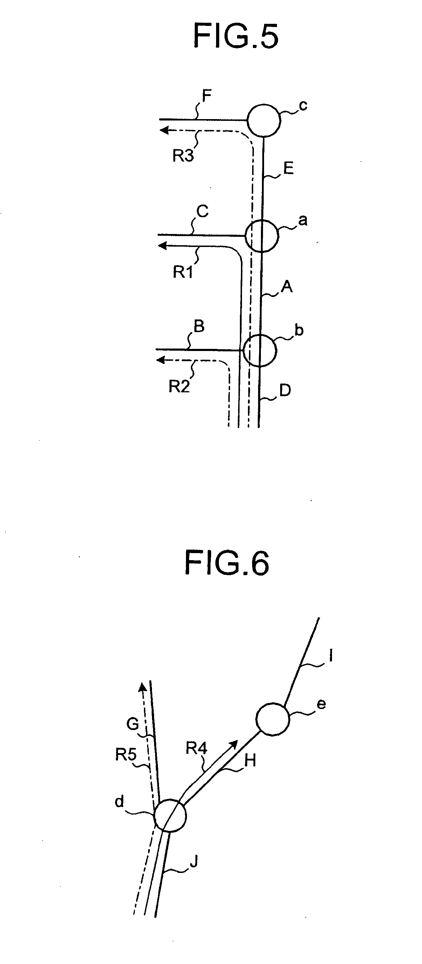

Fig. 4 is an explanatory diagram showing the deviation route database 400. Fig. 4 illustrates the deviation route database 400 in the case of traveling on a road configuration shown in Fig. 5. In Fig. 4, the deviation route database 400 of a link A (see Fig. 5) is shown as an example. The deviation route database 400 as shown in Fig. 4 is respectively associated with each link. However, the deviation route database 400 is not limited to the one associated with each link. The deviation route database 400 can be associated with each node.

The deviation route database 400 shown in Fig. 4 includes a link area 401, a partial route area 402, a deviation route area 403, and a deviation frequency area 404. In the link area 401, information to identify a link is stored. In the partial route area 402, information concerning a partial route related to a link (link A in the case of Fig. 4) is stored. In the partial route area 402, more than one piece of the information concerning a partial route can be stored for one link. In Fig. 4, the partial route area 402 is described as "partial route related to link A", and the deviation route area 403 is described as "deviation route contacting partial route".

In the deviation route area 403, information concerning a deviation route that is associated with each partial route is stored. In the present example, the deviation route is, when the partial route associated therewith constitutes a part of the guide route, information concerning a route deviates from the partial route. In the present example, a link (may include a node) that is actually passed upon deviation from the partial route is set as the deviation route based on a past driving history. The partial route and the deviation route are associated with each other based on a driving history of an unspecified number of mobile objects. The driving history of an unspecified number of mobile objects can be a vehicular driving history that is unrelated to the driving history of the concerned vehicle. The driving history of the concerned vehicle can be included in the driving history of an unspecified number of mobile objects.

In the deviation frequency area 404, information concerning a deviation level is stored. Specifically, the information concerning a deviation level can be, for example, a deviation frequency itself, or a deviation rate that is calculated based on the number of times each partial route is set as a part of a guide route and the number of times deviation has occurred.

Although in the present example, the partial route area 402 and the deviation route area 403 are provided in the same deviation route database 400, it is not limited thereto. As long as the partial route and the deviation route are associated with each other, the information stored in the partial route area 402 and the information stored in the deviation route area 403 can be respectively recorded as separated files. In this case, the respective files can be stored in different recording areas, for example, in the HD 314 and the CD/DVD (not shown).

When a past driving deviation history of the same vehicle is used in addition to the deviation frequency area 404, a counter (not shown) that counts the number of times each partial route is set as a part of a guide route, and a counter (not shown) that counts the number of times deviation has occurred are provided. In addition, an area in which a date, weather, and the like are recorded associated with a partial route can be provided in the deviation route database 400.

Fig. 5 is an explanatory diagram showing a road configuration. The road configuration is expressed with a link and a node. In Fig. 5, a road configuration in which a plurality of nodes a, b, and c are connected with a plurality of links A, B, C, D, E, and F is shown. With each link, the deviation route described above is associated.

For example, when the link A is the focus in the road configuration shown in Fig. 5, there are the following eight patterns as partial routes related to this link A. That is eight patterns including a case of traveling from the link D to the link C, the case of traveling from the link D to the link E, the case of traveling from the link B to the link C, the case of traveling from the link B to the link E, the case of traveling from the link E to the link D, the case of traveling from the link E to the link B, the case of traveling from the link C to the link D, and the case of traveling from the link C to the link B.

The partial route related to the link A has eight patterns when the "partial routes related to the link A" are realized with "partial routes constituted of three links including the link A". The partial route is not limited to one constituted of three links. Moreover, the partial route is not limited to one constituted using the same number of links before and after a subject link (for example, link A). For example, a partial route can be constituted of six links including two links before (entrance side) the subject link and three links after (traveling direction side) the subject link.

The deviation route that is associated with each partial route can be a single route or plural routes, and there also is a case where no deviation route is associated (link in a straight road, etc.). Specifically, for example, when traveling from the link D to the link C through the link A (R1 in Fig. 5), there are following two patterns of deviation routes. That is two patterns of deviation routes including deviation (R2 in Fig. 5) of traveling from the link D to the link B before reaching the link A and deviation (R3 in Fig. 5) of traveling from the link D to the link F through the link A.

Fig. 6 is an explanatory diagram showing another road configuration. In Fig. 6, a road configuration in which a plurality of nodes d and e are connected with a plurality of links G, H, I, and J is shown. Information concerning the deviation route is associated with the partial route shown in Fig. 6. When the link J is the focus in the road configuration shown in Fig. 6, there are following four patterns of partial routes related to this link J. That is four patterns including a case of traveling from the link J to the link H, the case of traveling from the link J to the link G, the case of traveling from the link H to the link J, and the case of traveling from the link G to the link J. This case is also a case in which the "partial routes related to the link J" are realized with "partial routes constituted of three links including the link J".

In the case (R4 in Fig. 6) of traveling from the link J to the link H in Fig. 6, a deviation route (R5 in Fig. 6) of traveling from the link J to the link G is associated. Even if the number of the deviation route is one, the deviation level can be set based on the number of times the deviation has occurred in past.

The deviation route of each partial route can be plural routes or a single route. Specifically, for example, regarding the node a, when travel is to be from the link A to the link C, deviation from traveling from the link A to the link E can occur.

### (Procedures in processing by navigation device)

Next, procedures in a processing performed by the navigation device are explained. The processing by the navigation device according to the present example is realized with respective processes of route retrieval, route guidance, and deviation determination.

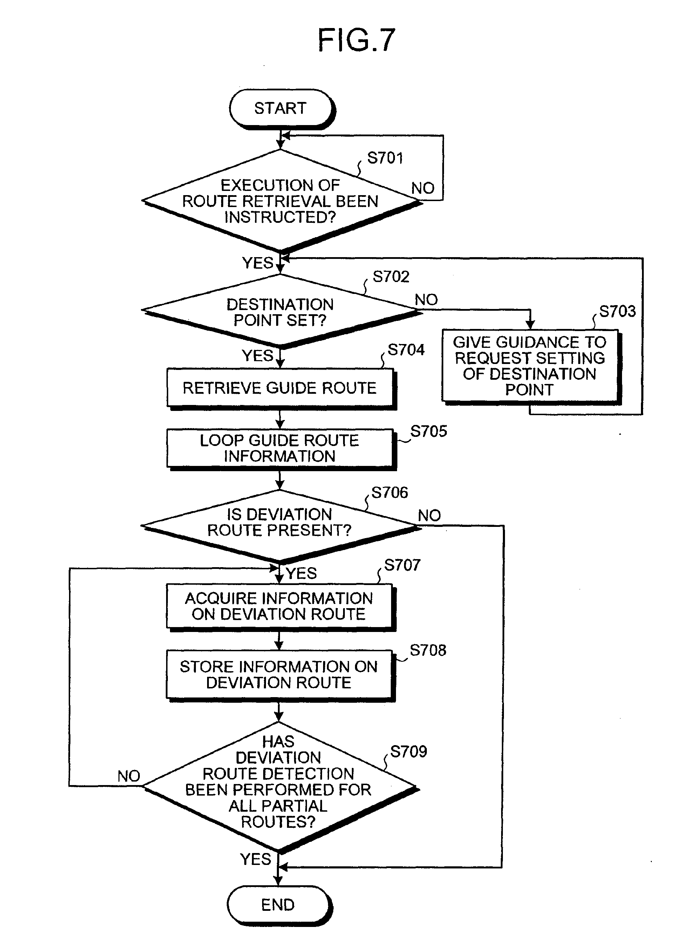

Fig. 7 is a flowchart showing procedures of a route retrieval process in the navigation device. In the process shown in Fig. 7, waiting occurs until it is determined that execution of route retrieval is instructed (step S701: NO). The execution of route retrieval is instructed by a user by operating the operation key 304.

When it is determined that the execution of route retrieval is instructed (step S701: YES), it is determined whether a destination point is set (step S702). When it is determined that a destination point is not set (step S702 : NO), guidance to request the setting of a destination point is given (step S703). At step S703, for example, a message such as "please set a destination point" can be displayed on the display 306, or can be output from the speaker 309.

When it is determined that a destination point is set (step S702: YES), retrieval of a guide route is performed (step S704), and information concerning the retrieved guide route is looped (step S705). In Fig. 7, the process at step S705 is described as "loop guide route information". At the loop of the guide route information, specifically, a partial route is extracted from a series of links constituting the guide route.

Next, detection of a deviation route that is associated with the extracted partial route and that deviates from the partial route is performed based on the deviation route database 400, and it is determined whether a deviation route that is associated with the extracted partial route is present (step S706). In Fig. 7, the process at step S706 is described as "is deviation route present?" When it is determined that a deviation route that is associated with the extracted partial route is not present (step S706: NO), the process is ended as it is.

When it is determined that a deviation route that is associated with the extracted partial route is present (step S706: YES), information concerning the deviation route is acquired (step S707). At step S707, for example, a deviation level is acquired as the information concerning the deviation route. If more than one deviation route is present, a deviation route that corresponds to each of the deviation routes can be acquired, or a deviation route having the highest deviation level can be extracted based on the acquired deviation level.

Furthermore, information concerning the acquired deviation route is stored in a predetermined memory area and associated with the partial route that is associated with this deviation route (step 5708). In Fig. 7, the process at step S708 is described as "store information concerning deviation route". As described above, the predetermined memory area can be provided in the ROM 302 or the RAM 303, or in the HD 314. The predetermined memory area stores the information in a non-volatile manner regardless of the ON/OFF state of the engine of the vehicle in which the navigation device is equipped.

Subsequently, it is determined whether detection of a deviation route has been performed for all extracted partial routes (step S709), and when it is determined that the detection of a deviation route has not been performed for all extracted partial routes (step S709: NO), the process returns to step S707. On the other hand, when it is determined that the detection has been performed for all deviation routes (step S709: YES), the process is ended.

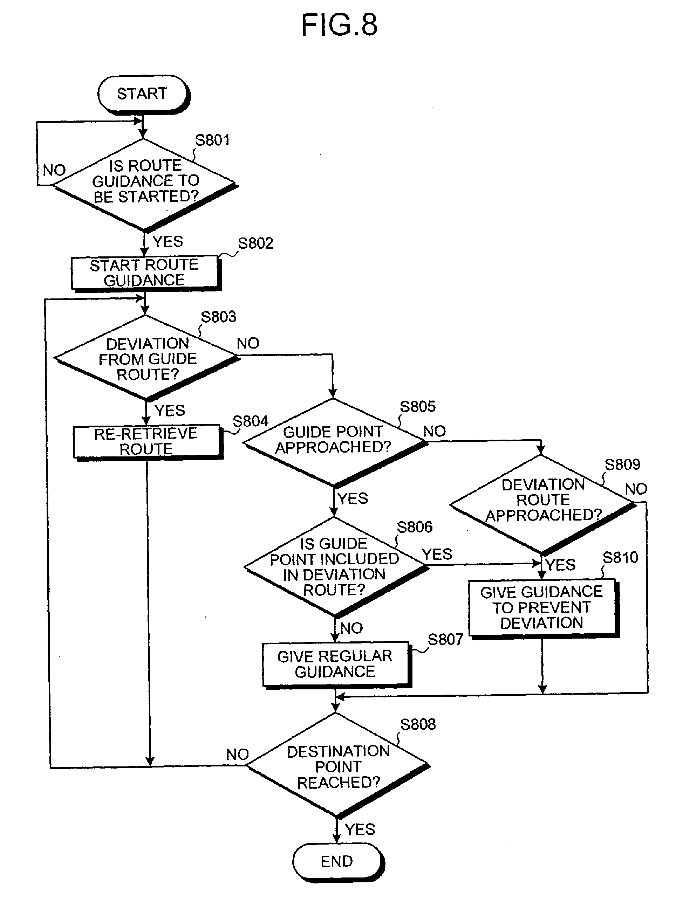

Fig. 8 is a flowchart showing procedures of a route guidance process in the navigation device. In the process shown in Fig. 8, waiting occurs until determined to start route guidance (step S801: NO). At step S801, commencement of route guidance may be determined when route guidance is instructed by a user through operation of the operation key 304 after the process shown in Fig. 7. At step S801, commencement of route guidance may be determined when a predetermined time has passed after a route is retrieved. Additionally, at step S801, commencement of route guidance may be determined when it is determined that the vehicle in which the navigation device is equipped has started traveling after a route is retrieved.

When commencement of route guidance is determined (step S801: YES), route guidance is started (step S802). It is then determined whether deviation from a guide route has occurred (step 5803). When it is determined that deviation from the guide route has occurred (step S803: YES), re-retrieval of a route is performed (step S804), and the process returns to step S803. In Fig. 8, the process at step S804 is described as "re-retrieve route".

When it is determined that deviation from the guide route has not occurred (step S803: NO), it is determined whether a guide point has been approached (step S805). The guide point is, as described above, a point at which the vehicle equipped with the navigation device is to change the current traveling direction or position, such as a point at which a right or left turn is made at an intersection and the like, a point at which deviation from a main road to a side road is made, and an interchange at which transition from a local road to an express road (or from an express road to a local road) is made.

When it is determined that a guide point has been approached (step S805: YES), it is determined whether the guide point is included in the deviation route stored at step S708 in Fig. 7 (step S806). In Fig. 8, the process at step S806 is described as "is guide point included in deviation route?" When it is determined that the guide point is included in the deviation route (step S806: YES), the process proceeds to step S810.

When it is determined that the guide point is not included in the deviation route (step S806: NO), regular guidance is given (step S807). At step S807, guidance for a right or left turn at an intersection and the like is given according to the guide route. The guidance can be given, for example, by displaying the road configuration for which the guidance is performed in more detail on the display 306 than a display of a regular guide route, or by displaying a guide line indicating a traveling direction on the road configuration displayed in detail. Moreover, the guidance can be given with a message such as "turn right at an intersection XX meters ahead" by sound.

Thereafter, it is determined whether the destination point has been reached (step S808). When it is determined that the destination point has not been reached (step S808: NO), the process proceeds to step S803. When it is determined that the destination point has been reached (step S808: YES), the process is ended.

When it is determined that a guide point has not been reached (step S805: NO), it is determined whether the deviation route has been approached (step S809). When it is determined that the deviation route has been approached (step S809: YES), guidance to prevent deviation is given (step S810), and the process proceeds to step S808. When it is determined that the deviation route has not been approached (step S809: NO), the process proceeds to step S808.

The guidance to prevent deviation can be given by displaying an image that shows an intersection at which a right or left turn is to be made in more detail than the case of a regular guidance, and can also be by giving a message such as "Proceed carefully as this intersection is confusing" and the like in addition to a message such as "turn right at the intersection XX meters ahead" by sound. Of course, the guidance to prevent deviation is given to an extent that does not interfere with driving in either case of a guidance using a display on the display 306 and/or sound.

At giving the guidance to prevent deviation, first, it is determined whether the deviation route is present in plurality. When plural deviation routes are present, guidance corresponding to a deviation frequency is given for each of the deviation routes based on a deviation level associated with each of the deviation routes.

Specifically, at step S810, for example, configuration can be such that the reporting of a deviation route having a high deviation level is given priority over the reporting of a deviation route having a low deviation level. Furthermore, specifically, at step S810, for example, configuration may be such that only a deviation route having a high deviation level is reported.

Even when the deviation route is present in singularity, reporting corresponding to the deviation frequency can be performed based on the deviation level that is associated with the deviation route. Specifically, for example, configuration may be such that only the deviation route whose deviation level is higher than a deviation level set in advance is reported. The setting of the deviation level in advance can be performed by a user by operating the operation key 304.

In addition, when a date, weather, and the like are associated with the partial route in the deviation route database 400, configuration may be such that, using such information, the guidance to prevent deviation is provided only when a condition such as a date and weather of the deviation coincides.

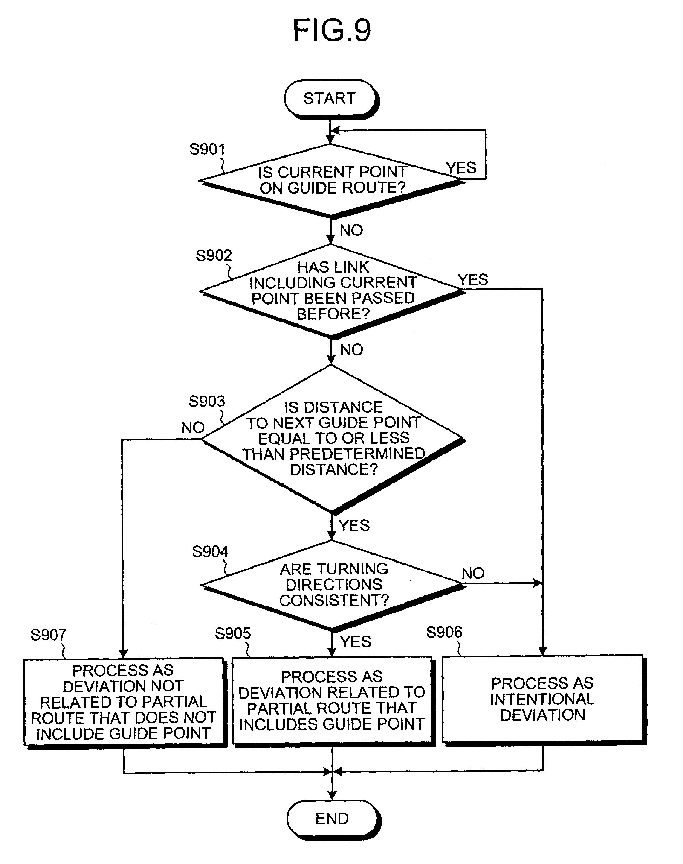

Fig. 9 is a flowchart showing procedures of a deviation determining process in the navigation device. The process shown in Fig. 9 is performed when it is determined, at step S803 in Fig. 8, whether deviation from the guide route has occurred. In the process shown in Fig. 9, it is determined whether a current point is present on the guide route based on the guide route and the current point (step S901), and waiting occurs until it is determined that the current point is not on the guide route (step S901: YES).

When it is determined that the current point is not on the guide route (step S901: NO), it is determined whether a link including the current point has been passed before (step S902). When it is determined that the link including the current position has never been passed (step S902: NO), it is determined whether a distance to a next guide point is equal to or less than a predetermined distance (step S903).

When it is determined that the distance to the next guide point is equal to or less than the predetermined distance (step S903: YES), it is determined whether a planned turning direction that is based on the guide route and a direction in which the vehicle has actually turned coincide (step 5904). In Fig. 9, the process at step S904 is described as "are turning directions consistent?"

When it is determined that the planned turning direction and the direction in which the vehicle has actually turned coincide (step S904: YES), it is processed as deviation related to a partial route including the guide point (step S905). In Fig. 9, the process at step S905 is described as "process as deviation related to partial route that includes guide point".

At step S905, specifically, for example, by communicating with a server computer that is capable of communicating through the communication I/F 311 to associate the partial route including the guide point and the deviation route that is a deviation from the partial route, information can be uploaded to the server computer.

On the other hand, when it is determined that the planned turning direction and the direction in which the vehicle has actually turned do not coincide (step S904: NO), it is processed as an intentional deviation (step 5906). Specifically, at step S906, it is stored as, for example, an ordinary driving history. At this time, information indicating that it is an intentional deviation from the guide route can be stored therewith.

When it is determined that the distance to the next guide point is not equal to or less than the predetermined distance (step S903: NO), it is processed as deviation not related to the partial route that does not include the guide point (step S907). In Fig. 9, the process at step S907 is described as "process as deviation not related to partial route that does not include guide point".

Specifically, at step S907, similarly to step S905, for example, by communicating with a server computer that is capable of communicating through the communication I/F 311 to associate the partial route not related to the guide point and the deviation route that is a deviation from the partial route, information in the server computer can be uploaded.

As described above, according to the navigation device of the present example, a deviation route that is associated with a partial route extracted from a guide route to a destination point and that is a deviation from the partial route is reported. This enables to report a deviation route that is a likely deviation when the guide route is configured as specific partial routes, not a single link or node.

According to the navigation device of the present example, it is possible to report, to a driver, a deviation route caused by, for example, buildings that actually exist, other circumstances in the environment, etc., not only based on, for example, the information concerning the road such as a connecting angle of roads and an attribute. Hence, based on actual use, this enables to call attention to not deviate and to achieve prevention of deviation from a guide route.

Moreover, according to the navigation device of the present example, based on past driving history and the information uploaded to the server computer that can be communicated through the communication I/F 311, when a partial route constitutes a part of a guide route, a past deviation route that is a deviation from the partial route 402 is reported. As described, since a deviation route based on an actual driving history is reported, preventing deviation from a guide route based on actual use is possible.

In this case, even for a partial route that is constituted of the same links and nodes, if the configuration order is different, the deviation route that is associated with this partial route is not reported. In other words, the deviation route is reported only when a partial route is constituted of the same links and nodes, and a traveling direction of which is the same. This enables prevention of deviation from a guide route further based on actual use.

Furthermore, according to the navigation device of the present example, based on the information concerning a deviation frequency that is associated with a deviation route, reporting corresponding to the deviation frequency is performed. Thus, it is possible to effectively report a deviation route having a high tendency of deviation during actual transit of a road, and to further effectively prevent deviation from a guide route based on actual use.

According to the navigation device of the present example, when a plurality of deviation routes are detected, reporting a deviation route corresponding to a deviation frequency is performed for each of the deviation routes based on information concerning a deviation frequency. In the navigation device according to the present example, for example, by reporting only a deviation route having a high deviation frequency among the detected deviation routes, excessive reporting can be avoided.

Moreover, in the navigation device according to the present example, for example, a report content can be arranged based on a deviation level associated with each of the detected deviation routes, and therefore, a deviation route having a high deviation frequency can be reported with priority over a deviation route having a low deviation frequency. Thus, the reporting of a deviation route having a high tendency of deviation can be given reporting priority, and within an allowable range, as much information as possible can be given to a driver.

When the deviation route database 400 is configured based on, as a driving history of an unspecified number of mobile objects, a vehicular driving history that is unrelated to the vehicular driving history of the navigation device equipped vehicle, a likely deviation, by the vehicle, from a partial route can be effectively prevented in general. It is possible that a driving history of the navigation device equipped vehicle is included in the driving history of the unspecified number of mobile objects.

In addition, according to the navigation device of the present example, when deviation from a guide route occurs, it is determined whether the deviation is a deviation related to a guide point, a deviation not related to a guide point, or an intentional deviation, and a result of the determination is stored, or deviation information is reported to a server computer that is capable of communicating through the communication I/F 311, thereby improving accuracy of the deviation information. Thus, a deviation result can be reflected in route guidance to be performed later.

Specifically, even for a guide route that includes the same links, the reporting of a deviation route can be selectively performed according to whether the links are related to a guide point. This enables to report a point at which deviation is likely occur only when it is related to a guide point, and avoids excessive reporting.

Furthermore, through a configuration that reports a deviation route only when a condition such as a date and weather of deviation coincides in the deviation route database 400, deviation from a guide route can be prevented while avoiding excessive reporting.

While in the present example, the deviation route database 400 is stored in the HD 314, it is not limited thereto. For example, the deviation route database 400 can be stored in a server computer that is capable of communication through the communication I/F 311. This enables to collect information concerning a deviation route from each of a plurality of navigation devices that can communicate with the server computer. The collection of the information concerning a deviation route can be performed in real-time at the time of deviation from a partial route.

As described, by acquiring the information concerning a deviation route from each of the navigation devices equipped in a plurality of vehicles, a more accurate deviation rate (including the number of times of deviation) can be obtained in the deviation route database 400 that is provided in the server computer. By giving a guidance to prevent deviation based on the deviation rate with higher accuracy, deviation can be effectively prevented.

In the navigation device that is not equipped with the communication I/F 311 and the like, configuration may be such to update the content of the deviation route database 400 stored in the HD 314 or the CD/DVD (not shown) regularly or irregularly. Thus, even in the navigation device not equipped with the communication I/F 311, the information concerning a deviation route that is collected from a plurality of vehicles can be reflected in the deviation route database 400 of the navigation device. This enables to prevent deviation from a guide route with greater accuracy even in the navigation device not equipped with the communication I/F 311.

The guide method explained in the present example can be implemented using a computer, such as a personal computer and a workstation, to execute a program that is prepared in advance. This program is recorded on a computer-readable recording medium such as a hard disk, a flexible disk, the CD-ROM 302, an MO, and a DVD, and is executed by a computer reading from the recording medium. Moreover, this program can be a transmission medium that can be distributed through a network such as the Internet.

## Claims

1. A guide device (100) comprising:
a partial-route extracting unit (101) configured to extract, from a guide route to a destination point, a partial route constituting a part of the guide route;
a detecting unit (102) configured to detect a deviation route that is associated with the partial route extracted by the partial-route extracting unit and that deviates from the partial route;
an acquiring unit (104) configured to acquire information concerning a deviation frequency that is associated with the deviation route detected by the detecting unit (102);
a deviation-route extracting unit (105) configured to extract, when a plurality of deviation routes are detected by the detecting unit (102), a deviation route whose deviation tendency is the highest based on the information concerning a deviation frequency;
a reporting unit (103) configured to report, based on the information concerning a deviation frequency acquired by the acquiring unit (104), a detection result detected by the detecting unit (102), wherein
the reporting unit is configured such that, when a deviation route is extracted by the deviation-route extracting unit, it reports the extracted deviation route.

2. The guide device according to claim 1, wherein the partial route and the deviation route are associated with each other based on a driving history of an unspecified number of mobile objects.

3. The guide device according to claim 2, wherein the deviation-route extracting unit is configured to extract the deviation route whose deviation tendency is the highest based on a deviation rate that is calculated based on a number of times that a given route stored in the driving history is set as a part of a guide route and a number of times that a mobile object has deviated from the given route.

4. A server computer that is capable of communicating with a guide device that guides a mobile object to a destination, the server computer comprising:
a storing unit that stores information concerning a partial route to the destination;
a receiving unit configured to receive information that concerns a deviation route extracted by the guide device, the deviation route having been extracted from a plurality of detected deviation routes as the deviation route whose deviation tendencies is the highest based on information concerning a deviation frequency and provided to the receiving unit by a reporting unit on the guide device;
a calculating device configured to calculate, based on the information that concerns a deviation route and which is received by the receiving unit, a deviation rate for the deviation route, wherein
at the guide device, based on the deviation rate, guidance to prevent deviation is reported.

5. A guide method comprising:
a partial-route extracting step of extracting, from a guide route to a destination point, a partial route constituting a part of the guide route;
a detecting step of detecting a deviation route that is associated with the partial route extracted at the partial-route extracting step and that deviates from the partial route;
an acquiring step of acquiring information concerning a deviation frequency that is associated with the deviation route detected at the detecting step;
a deviation-route extracting step of extracting, when a plurality of deviation routes are detected at the detecting step, a deviation route whose deviation tendency is the highest based on the information concerning a deviation frequency;
a reporting step of reporting, based on the information concerning a deviation frequency acquired at the acquiring step, a detection result detected by the detecting step, wherein
the reporting step includes, when a deviation route is extracted at the deviation-route extracting step, reporting the extracted deviation route.

6. A guide program that causes a computer to execute the guide method according to claim 5.

## Patentansprüche

1. Führungseinrichtung (100), umfassend:
eine Extraktionseinheit (101) für Teilrouten, die konfiguriert ist, aus einer Führungsroute bis zu einem Zielpunkt, eine Teilroute zu extrahieren, die einen Teil der Führungsroute konstituiert;
eine Detektionseinheit (102), die konfiguriert ist, eine Abweichroute zu detektieren, die mit der Teilroute assoziiert ist, die von der Extraktionseinheit (101) für Teilrouten extrahiert wurde und die von der Teilroute abweicht;
eine Erfassungseinheit (104), die konfiguriert ist, Information zu erfassen, die eine Abweichhäufigkeit betrifft, die mit der Abweichroute assoziiert ist, die von der Detektionseinheit (102) detektiert wurde ;
eine Extraktionseinheit (105) für Abweichrouten, die konfiguriert ist, wenn eine Vielheit von Abweichrouten von der Detektionseinheit (102) detektiert wird, eine Abweichroute zu extrahieren, deren Abweichtendenz die höchste auf der Information beruhend ist, die eine Abweichhäufigkeit betrifft;
eine Meldeeinheit (103), die konfiguriert ist, auf der Information hinsichtlich einer Abweichhäufigkeit beruhend, die von der Erfassungseinheit (104) erfasst wurde, ein von der Detektionseinheit (102) detektiertes Detektionsergebnis zu melden, wobei
die Berichtseinheit derart konfiguriert ist, dass, wenn eine Abweichroute von der Extraktionseinheit für Abweichrouten extrahiert wird, diese die herausgezogene Abweichroute meldet.

2. Führungseinrichtung nach Anspruch 1, wobei die Teilroute und die Abweichroute miteinander, auf einer Fahrhistorie einer nicht spezifizierten Zahl mobiler Objekte beruhend, assoziiert sind.

3. Führungseinrichtung nach Anspruch 2, wobei die Extraktionseinheit für Abweichrouten konfiguriert ist, die Abweichroute zu extrahieren, deren Abweichtendenz die höchste auf einer Abweichrate beruhend ist, die darauf beruhend berechnet wird, wie viele Male eine gegebene Route in der Fahrhistorie gespeichert wurde, als Teil einer Führungsroute und darauf beruhend eingestellt wird, wie viele Male ein mobiles Objekt von der gegebenen Route abgewichen ist.

4. Server Computer, der fähig ist, mit einer Führungseinrichtung zu kommunizieren, die ein mobiles Objekt zu einem Ziel führt, wobei der Server Computer umfasst:
eine Speichereinheit, die Information hinsichtlich einer Teilroute zum Ziel speichert;
eine Empfangseinheit, die konfiguriert ist, Information zu empfangen, die eine Abweichroute betrifft, die von der Führungseinrichtung extrahiert worden ist, wobei die Abweichroute aus einer Vielheit von detektierten Abweichrouten als die Abweichroute extrahiert worden ist, deren Abweichtendenzen die höchste auf Information basierend ist, die eine Abweichhäufigkeit betrifft und der Empfangseinheit durch eine Meldeeinheit an der Führungseinrichtung bereitgestellt wird;
eine Recheneinrichtung, die konfiguriert ist, eine Abweichrate für die Abweichroute, auf der Information beruhend, die eine Abweichroute betrifft und welche von der Empfangseinheit empfangen wird, zu berechnen, wobei
an der Führungseinrichtung, auf der Abweichrate basierend, Führung zum Verhindern von Abweichung gemeldet wird.

5. Führungsverfahren, umfassend:
einen Extraktionsschritt für Teilrouten zur Extraktion, aus einer Führungsroute bis zu einem Zielpunkt, einer Teilroute, die einen Teil der Führungsroute konstituiert;
einen Detektionsschritt zum Detektieren einer Ausweichroute, die mit der Teilroute assoziiert ist, die beim Extraktionsschritt für Teilrouten extrahiert wurde und, die von der Teilroute abweicht;
einen Erfassungsschritt zum Erfassen von Information, die eine Abweichhäufigkeit betrifft, die mit der beim Detektionsschritt detektierten Abweichroute assoziiert ist;
einen Extraktionsschritt für Abweichrouten zur Extraktion, wenn eine Vielheit von Abweichrouten beim Detektionsschritt detektiert wird, einer Abweichroute, deren Abweichtendenz die höchste, auf der Information beruhend ist, die eine Abweichhäufigkeit betrifft;
einen Meldeschritt zum Melden, beruhend auf Information, die eine Abweichhäufigkeit betrifft, die beim Erfassungsschritt erfasst wurde, eines Detektionsergebnisses, das vom Detektionsschritt detektiert wurde, wobei
der Berichtsschritt, wenn eine Abweichroute beim Extraktionsschritt für Abweichrouten extrahiert wird, das Melden der extrahierten Abweichroute einschließt.

6. Führungsprogramm, das bewirkt, das ein Computer das Führungsverfahren nach Anspruch 5 ausführt.

## Revendications

1. Dispositif de guidage (100) comportant :
une unité d'extraction d'itinéraire partiel (101) configurée pour extraire, en provenance d'un itinéraire de guidage jusqu'à un point de destination, un itinéraire partiel constituant une partie de l'itinéraire de guidage ;
une unité de détection (102) configurée pour détecter un itinéraire de déviation qui est associé à l'itinéraire partiel extrait par l'unité d'extraction d'itinéraire partiel (101) et qui dévie par rapport à l'itinéraire partiel ;
une unité d'acquisition (104) configurée pour acquérir des informations se rapportant à une fréquence de déviation qui est associée à l'itinéraire de déviation détecté par l'unité de détection (102) ;
une unité d'extraction d'itinéraire de déviation (105) configurée pour extraire, quand une pluralité d'itinéraires de déviation sont détectés par l'unité de détection (102), un itinéraire de déviation dont la tendance à la déviation est la plus élevée d'après les informations se rapportant à une fréquence de déviation ;
une unité de rapport (103) configurée pour rapporter, d'après les informations se rapportant à une fréquence de déviation acquise par l'unité d'acquisition (104), un résultat de détection détecté par l'unité de détection (102), dans lequel
l'unité de rapport est configurée de sorte que, quand un itinéraire de déviation est extrait par l'unité d'extraction d'itinéraire de déviation, elle rapporte l'itinéraire de déviation extrait.

2. Dispositif de guidage selon la revendication 1, dans lequel l'itinéraire partiel et l'itinéraire de déviation sont associés l'un par rapport à l'autre d'après un historique de trajets d'un nombre non spécifié d'objets mobiles.

3. Dispositif de guidage selon la revendication 2, dans lequel l'unité d'extraction d'itinéraire de déviation est configurée pour extraire l'itinéraire de déviation dont la tendance à la déviation est la plus élevée d'après un taux de déviation qui est calculé d'après un nombre de fois qu'un itinéraire donné stocké dans l'historique de trajets est réglé comme faisant partie d'un itinéraire de guidage et un nombre de fois qu'un objet mobile a dévié par rapport à l'itinéraire donné.

4. Ordinateur serveur qui est en mesure de communiquer avec un dispositif de guidage qui guide un objet mobile jusqu'à une destination, l'ordinateur serveur comportant :
une unité de stockage qui stocke des informations se rapportant à un itinéraire partiel jusqu'à la destination ;
une unité de réception configurée pour recevoir des informations qui se rapportent à un itinéraire de déviation extrait par le dispositif de guidage, l'itinéraire de déviation ayant été extrait en provenance d'une pluralité d'itinéraires de déviation détectés comme étant l'itinéraire de déviation dont la tendance à la déviation est la plus élevée d'après des informations se rapportant à une fréquence de déviation et fournies à l'unité de réception par une unité de rapport sur le dispositif de guidage ;
un dispositif de calcul configuré pour calculer, d'après les informations qui se rapportent à un itinéraire de déviation et qui sont reçues par l'unité de réception, un taux de déviation pour l'itinéraire de déviation, dans lequel
au niveau du dispositif de guidage, d'après le taux de déviation, un guidage empêchant la déviation est rapporté.

5. Procédé de guidage comportant :
une étape d'extraction d'itinéraire partiel consistant à extraire, en provenance d'un itinéraire de guidage jusqu'à un point de destination, un itinéraire partiel constituant une partie de l'itinéraire de guidage ;
une étape de détection consistant à détecter un itinéraire de déviation qui est associé à l'itinéraire partiel extrait lors de l'étape d'extraction d'itinéraire partiel et qui dévie par rapport à l'itinéraire partiel ;
une étape d'acquisition consistant à acquérir des informations se rapportant à une fréquence de déviation qui est associée à l'itinéraire de déviation détecté lors de l'étape de détection ;
une étape d'extraction d'itinéraire de déviation consistant à extraire, quand une pluralité d'itinéraires de déviation sont détectés lors de l'étape de détection, un itinéraire de déviation dont la tendance à la déviation est la plus élevée d'après les informations se rapportant à une fréquence de déviation ;
une étape de rapport consistant à rapporter, d'après les informations se rapportant à une fréquence de déviation acquises lors de l'étape d'acquisition, un résultat de détection détecté par l'étape de détection, dans lequel
l'étape de rapport comprend, quand un itinéraire de déviation est extrait lors de l'étape d'extraction d'itinéraire de déviation, le rapport de l'itinéraire de déviation extrait.

6. Programme de guidage qui amène un ordinateur à exécuter le procédé de guidage selon la revendication 5.
